# EUROPEAN PATENT SPECIFICATION

(11) **EP 3 388 396 B1**
(45) Date of publication and mention of the grant of the patent: **10.08.2022**
(21) Application number: 16873441.6
(22) Date of filing: 21.07.2016
(51) Int. Cl.: B01D 36/00, C02F 1/28, B01D 24/10, C02F 1/00, B01D 15/22, B01D 15/18

(54) **LIQUID PURIFICATION DEVICE**
FLÜSSIGKEITSREINIGUNGSVORRICHTUNG
DISPOSITIF DE PURIFICATION DE LIQUIDE

(30) Priority: 10.12.2015 RU 2015153119
(43) Date of publication of application: 17.10.2018
(73) Proprietor: Electrophor, Inc., Woodmere NY 11598 (US)
(72) Inventor: BAIGOZIN, Denis Vladislavovich, St.Petersburg 192177 (RU); KUZMIN, Alexei Leonidovich, St.Petersburg 198215 (RU); SURZHENKO, Dmitry Andreevich, St.Petersburg 195253 (RU); SHMIDT, Joseph Lvovich, Woodmere, New York 11598 (US)
(74) Representative: Danubia Patent & Law Office LLC
(86) International application number: PCT/RU2016/000465
(87) International publication number: WO 2017/099624

(56) References cited:
- CN-A- 101 732 901
- CN-Y- 2 637 473
- RU-C1- 2 163 829
- RU-C1- 2 163 829
- RU-C1- 2 540 159
- US-B1- 6 638 426
- US-B1- 6 638 426

## Description

### FIELD OF INVENTION

The invention relates to a liquid purification device, and provided for water purification from local sources, for example, holes, wells, etc. and/or municipal sources for domestic and/or for drinking water supply and is intended for use in living conditions and in the country and garden plots.

### BACKGROUND OF THE INVENTION

The operating principle of the invention relates to liquid purification devices of the pressureless type, because liquid flows through a device by gravity under the gravity force. The known constructions of pressureless type liquid purification devices typically include elements such as a source liquid tank and a purified liquid tank that communicate with each other through a liquid purification device. Devices known from the state of the art operate as follows: source liquid is poured in a source liquid tank from where it flows by gravity into a liquid purification device, where liquid purification process is performed, and then from a liquid purification device purified liquid flows to a purified liquid tank. Devices known from the state of the art generally consist of a body frame and a filtering zone formed by a filter medium that consists of a filter material and a post-filtering element. A granular or a fibrous sorbents, for example, an activated carbon, an ion exchange resin, an ion exchange fiber or a mixture of these sorbents are generally used as filter material in liquid purification devices known from the state of the art. A meshy post-filters or a hollow fiber elements can be used as a post-filtering element in known from the state of the art a liquid purification devices.

The liquid purification device according to US Patent No. 8,080,160 [Mitsubishi Rayon Co., Ltd, IPC B01D 63/02, B01D 41/02, B01D 61/18, B01D 61/00, published on 20.12.2011] is an example of a device of specified type known from the state of the art. The device of US Patent No. 8,080,160 consists of a body frame including an upper filtering zone and a lower filtering zone separated by a mesh of liquid permeable material with a filter medium placed in both zones. In an upper filtering zone a filter material is used as a filter medium, and in a lower filtering zone a hollow fiber element (hereinafter, the HF element) is used as a filter medium. The body frame of the liquid purification device consists of a lower main part and a lid. Inlet holes for source liquid are made in the lid of the body frame of the liquid purification device. The lower main part of the body frame is provided with outlet holes for purified liquid.

The device according to US Patent No. 8,080,160 operates as follows. Source liquid through the holes made in the lid passes down from the top through a filter material of the upper filtering zone and then penetrates into the HF element of the lower filtration zone. Purified liquid exits through holes formed in a bottom wall of the body frame of the liquid purification device.

The main disadvantage of the above described liquid purification device is that during filtration, when liquid flows through the filtering zones, air is released from the filtering zones. Smallest air bubbles agglomerate and expand over time, which leads to blocking at least part of a filter material, which reduces speed and efficiency of liquid purification.

In order to facilitate the collection of air and its removal outside of a purification device, such devices are made with an air vent means. This air vent means is usually made in the form of a vertical tube of small diameter, but sufficient to accumulate the volume of air necessary to overcome the resistance of the liquid. The air outlet is formed in the upper wall of the tube.

Device according to US Patent No. 4,306,971 [Chemie Brita Gerate Ing., IPC B01D 23/10, published on 22.12.1981] is known from the state of the art. The liquid purification device consists of a body frame containing a filtering zone with a filter medium located inside and an air vent means for removal air from the filtering zone. The air vent means consists of a base, a vertical part and an air outlet element located in the upper wall of the vertical part. An inlet holes for source liquid are made in a base of the air vent means. The air vent means also performs a function of a lid for the body frame of the liquid purification device. The outlet holes for purified liquid are made in a lower part of the body frame of the liquid purification device.

The liquid purification device according to US Patent No. 4,306,971 operates as follows. The liquid purification device is located between a source liquid tank and a purified liquid tank. The source liquid tank is filled with source liquid, while the height of a liquid column should not exceed the height of a vertical part of the air vent means. Source liquid flows to the filtering zone through the inlet holes for source liquid that are made at the base of the air vent means. Liquid displaces air from the filtering zone while passing through the filter medium. Displaced air rises along the vertical part of the air vent means and is discharged from the device through the air outlet element. At the same time purified liquid flows into the purified liquid tank through the outlet holes for purified liquid.

The liquid purification device according to US Patent No. 4,306,971 has a number of disadvantages. The main disadvantage of this device is that source liquid enters to the filtering zone from above. Since there is air in the filtering zone, which must rise to the top, liquid and air flows collide, which reduces the filtration rate of liquid and prevents efficient air removal from the liquid purification device.

There is a collision of liquid and air flows because air present in the filtering zone must rise to the top. This effect reduces the filtration rate of liquid and prevents efficient removal of air from the liquid purification device. Also the construction of the air vent means comprises the air outlet only in the central part of the liquid purification device. Air bubbles can form in the areas of a filtering zone, near the side walls of the body frame and near the base of the air vent means, which will lead to an additional decrease in the filtration rate.

The liquid purification device according to EP Patent Application No. 2754642 [Mitsubishi Rayon Co., Ltd, IPC B01D 63/00, B01D 63/02, C02F 1/28, C02F 1/44, published on 16.07.2014] is known from the state of the art. The liquid purification device consists of a body frame inside of which an upper and a lower filtering zones and a tube for feed liquid collecting are located. Therein the upper and the lower filtering zones are separated by an impermeable barrier and contain a filter medium. Also the liquid purification device according to EP 2754642 comprises an air vent means that is intended for air removal from the lower filtering zone and is made in the form of a vertical tube, in the upper wall of which there is an air outlet element. The filter medium of the upper filtering zone is a sorption material. Filter medium of the lower filtering zone is made in the form of HF element. The upper wall of the body frame of the liquid purification device is provided with inlet holes for source liquid. The tube for feed liquid collecting is located in the central part of the upper filtering zone and is connected to the lower filtering zone. The side walls of the tube for feed liquid collecting are permeable for liquid. The air vent means is disposed on an outer upper surface of the liquid purification device body frame above the level of source liquid holes that are located in the upper wall of the body frame of the liquid purification device. The air outlet element is formed as a hole and located in central part of the upper wall of the air vent means. The air vent means is connected to the tube for feed liquid collecting. The outlet hole for purified liquid is formed in the base of the body frame of the liquid purification device.

The liquid purification device operates as follows.

Source liquid enters the upper filtering zone through the inlet holes for source liquid located in the upper wall of the body frame of liquid purification device, and then passes the filter material. After which liquid enters the lower filtering zone through the tube for feed liquid collecting. Purified liquid after passing through the lower filtering zone, exits the liquid purification device through the outlet hole for purified liquid formed in the base of the body frame of the liquid purification device. During liquid passes through the lower filtering zone, air is expelled from it. This air enters the air vent means through the tube for feed liquid collecting and then exits above the liquid purification device through the air outlet element.

The liquid purification device according to the application EP 2754642 has a number of disadvantages. For example, feed liquid enters the lower filtering zone from the top and flows down from the top, while air released from the lower filtering zone rises top from the down. Thus, there is a collision between liquid and air flows inside the lower filtration zone. In addition, there is a collision between liquid and air flows in the tube for feed liquid collecting because liquid flows into the lower filtering zone through the tube for feed liquid collecting and air from the lower filtering zone enters the air vent means also through the tube for feed liquid collecting. These collisions degrade efficiency of air discharging from the lower filtering zone, which leads to the fact that air partly remains in the lower filtering zone. This effect reduces the speed and efficiency of liquid purification. In addition, based on description of the device according to the application EP 2754642, the tube for feed liquid collecting is permeable for liquid, and therefore permeable to air, so there is a possibility of air penetration, which goes up along the tube through its side walls into the volume of the filter material of the upper filtering zone. This fact leads to degradation of liquid passage through the upper filtering zone and to decrease of the liquid filtration efficiency.

Also a disadvantage of referred liquid purification device is that the lower and upper filtering zones are separated by a partition and the liquid from the upper filtering zone enters the lower filtering zone only through the tube for feed liquid collecting located in the central part of the filtering zone. Thus, during the filtration process mainly the central part of the lower filtering zone is used, so the lower filtering zone is not used effectively.

The liquid purification device according to US Patent No. 6,638,426 [The Clorox Company, IPC B01D 27/02, B01D 27/14, published on 28.10.2003] is known from the state of the art. The liquid purification device comprising a body frame that includes an upper and a lower filtering zones with a filter medium arranged inside, an air vent means for air vent from the lower filtering zone and configured as an inverted feeder. The air vent means comprises a liquid permeable conical base and a liquid impermeable vertical part that is provided with an air outlet element located in the upper wall of the air vent means. A sorption filter material is located in the upper filtering zone. A HF element is located in the lower filtering zone.

The air vent means is located in the central part of the upper filtering zone. In this case the base of the air vent means simultaneously performs the function of the partition between the lower and upper filtering zones. The holes for liquid flowing from the upper filtering zone to the lower filtering zone are formed in the base of the air vent means. The height of the vertical part of the air vent means exceeds the height of the upper filtering zone so that a portion of the vertical part of the air vent means, including the air outlet element, is located outside the upper filtering zone. The air outlet element is made in the form of a hole.

The body frame of the liquid purification device consists of a lower main part and a lid. The outlet holes for purified liquid are made in the lower main part. The lid of the body frame of the liquid purification device consists of two elements: a lower part containing inlet holes for enter source liquid to the upper filtering zone and a convex upper part in which air holes are made, that are operatively connected with the air outlet element of the air vent means.

The liquid purification device of US Patent No. 6,638,426 operates as follows.

Source liquid enters the upper filtering zone through the holes located in the lower part of the lid, then passing through the filter material of the upper filtering zone enters the lower filtering zone through the holes formed in the base of the air vent means. Liquid displaces air from the lower filtering zone during passing through the lower filtering zone. Displaced air is lifted upward by a countercurrent flow and accumulates at the base of the air vent means. When the air sufficient to form a bubble is accumulated in the base of the air vent means, the air rises along the vertical part of the air vent means, then passes the air outlet element and the air holes formed in the lid of the body frame of the liquid purification device and after it leaves the device through the liquid outlet hole.

The liquid purification device according US Patent No. 6,638,426 has a significant disadvantage. As was noted above, when liquid passes through the lower filtering zone, air flow rises towards liquid flow. Thus, liquid and air flows collide in the lower filtering zone, which prevents the air removal from the filtering zone. Also in the device listed above, an element that directs all air to the vertical part of the air vent means is not provided. Therefore, some air can enter the upper filtering zone through the holes in the base of the air vent means and stay in the upper filtering zone, blocking part of the filtering zone. This effect reduces rate of liquid purification and efficiency of usage and operation of the upper filtering zone. This is a common disadvantage of the liquid purification devices according to US Patent No. 6,638,426 and Patent Application EP 2754642. These disadvantages also explain the lack of evidence of widespread practical application of US Patent No. 6,638,426 device.

The liquid purification device according to the Patent RU 2163829 [CJSC "METTEM-TECHNOLOGY", IPC B01D24/18, B01D27/02, B01D29/56, published on 10.03.2001] is known from the state of the art and is selected by the Applicant as the closest analogue.

The liquid purification device according to the Patent RU 2163829 (the second embodiment) consists of a body frame including an upper and a lower filtering zones with a filter medium arranged therein, a means for changing the direction of feed liquid flow, an air vent means for venting air from the lower filtration zone. The air vent means is made in the form of a vertical tube equipped with an air outlet element located in the upper wall of the air vent means. The liquid purification device is located in the body of a source liquid tank, wherein the lower filtering zone is located in the lower part of the body of the source liquid tank. Vertical partitions impermeable for liquid are located in the lower filtering zone. The outer vertical partition is located closer to the inner wall of the lower part of the source liquid tank, and the inner vertical partition. The outer section and the inner section are located between these partitions. Two types of the filter material are placed in the outer section. The third type of filter material is placed in the inner section. The sections are limited by partitions permeable for liquid from above and from below. The channel for feed liquid passage is formed between the inner wall of the lower part of the source liquid tank body and the outer impermeable partition. The channel for feed liquid passage is connected to the tube for feed liquid collecting which is located in the central part of the upper filtering zone. At the same time the channel for feed liquid passage is not part of the lower filtering zone, because it ensures only passage of liquid, and not its purification. Said partitions and the channel for feed liquid passage together form the means for changing the direction of feed liquid flow.

The air vent means is inserted into the tube for feed liquid collecting. Stopper permeable for air is located at the top of the air vent means and is made from activated carbon.

The liquid purification device according to the Patent RU 2163829 (the second embodiment) operates as follows. The liquid purification device is installed between the source liquid tank and the purified liquid tank. The source liquid tank is filled with source liquid. In this case, height of a source liquid column should not exceed the height of a vertical part of the air vent means of the liquid purification device. Entering the body frame of the liquid purification device source liquid flows by gravity to the upper filtering zone and through the tube for feed liquid collecting enters down from the top to the channel of the means for changing the direction of feed liquid flow, and then passes to the lower filtering zone. Then liquid enters the lower part of the side section through the partition permeable for liquid, then rises and consistently passes two filter materials of the side section, and through the partition permeable for liquid located on top of the central section inflows into the central section from above. Further purified liquid exits outwards through the hole formed in the lower part of the body frame of the liquid purification device. Air is displaced from volume of the filter material when feed liquid enters the filter material of the side section and passes into the central section. Liquid flow coincides with the direction of air flow since in the side section feed liquid rises from up the bottom. When liquid passes into the central zone, the flow of the incoming feed liquid is countercurrent to air flow that leaves the volume of the filter material.

As indicated in the specification of the patent RU 2163829, since liquid flows through the largest volume of the filter material up from the bottom, so the air vent means for air evolved during filtration is provided. In this case, liquid enters the filter material layer down from the top, colliding with the air bubbles that are present in the filter material layer, makes it difficult for air to flow upwards towards the air vent means and for liquid to flow into the filter material layer, and consequently reduces the rate and degree of liquid purification due to decrease of useful surface area of the filter material.

There are the main disadvantages of the said liquid purification device. CN101732901A discloses a water purifying gravity filter comprising distinct upper and lower filtering zones and means for removing air from the lower filtering zone during filling with liquid.

### SUMMARY OF THE INVENTION

In light of the above, the invention relates to a liquid purification device as defined in claim 1. Possible further preferred embodiments of the device are set forth in claims 2 to 15.

### BRIEF DESCRIPTION OF THE DRAWINGS

Essence of the invention is explained in greater details in the drawings in which
FIG. 1 depicts the liquid purification device.
FIG. 2 depicts the upper filtering zone with the vertical part of the air vent means and the air vent element made in the form of a hole with the diameter of 1 mm, for example.
FIG. 3 depicts the upper filtering zone with the vertical part of the air vent means and the air vent element made in the form of a valve.
FIG. 4 depicts the upper filtering zone with the vertical part of the air vent means and the air vent element made in the form of a capillary.

### DETAILED DESCRIPTION OF THE INVENTION

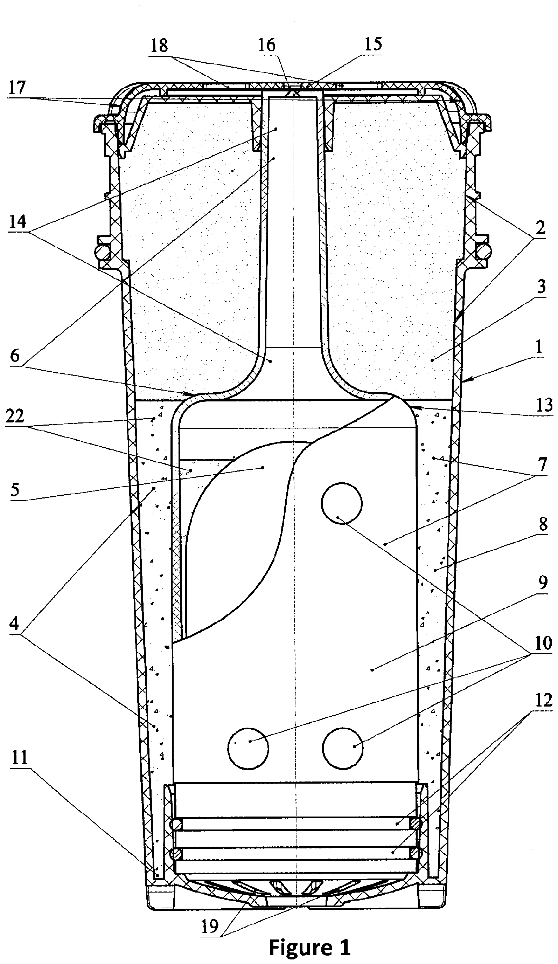

In the claimed invention the liquid purification device (FIG. 1) consists of the body frame 1 comprising the main part (not presented in figures) and the lid 17 in which the means for source liquid inlet 18 are made in the form of holes. The upper filtering zone 2 comprising the filter medium 3 made of, for example, and not limited to, an activated carbon, an activated carbon fiber, an ion exchange resin, an ion exchange fiber or a mixture of these sorbents, and the lower filtering zone 4 including the hollow fiber element 5 and the sorption filter material 22, the air vent means 6 and the means for changing the direction of feed liquid flow 7 are located in the body frame 1. Outlet holes 19 for purified liquid are provided in the bottom wall of the main part of the body frame 1 of the liquid purification device.

The means for changing the direction of feed liquid flow 7, comprising the filter medium 3 in the form of said sorption filter material 22 is simultaneously the lower filtering zone 4, and is formed by the chamber 9 with variable shape and size with the inlet holes 10 located in the upper or the upper and the lower parts of side wall of this chamber 9 and the vertically oriented inner annular space 8 that is in liquid communication with the chamber 9 through the inlet holes 10 and is formed by the inner side wall of the body frame 1 of the liquid purification device and the outer side wall of the chamber 9. The upper edge of the vertically oriented inner annular space 8 coincides with the boundary layer of the filter material 22 of the upper filtering zone 2, and at the bottom it coincides with the bottom wall 11 of the body frame 1 of the liquid purification device.

Opposed to the channel for passage of feed liquid in the liquid purification device of the closest analogue, the vertically oriented inner annular space 8 of the claimed invention enters the lower filtering zone 4 and is used not only for feed liquid passage - from the upper filtering zone 2 into the chamber 9 through the inlet holes 10 in the radial direction, but also for liquid purification, since it contains the sorption filter material 22.

The lower part of the chamber 9 of the means for changing the direction of feed liquid flow 7 has at least one sealing element 12 which can be made, for example, integrally with the side wall of the chamber 9, or can be made as a separate element connected to the side wall of the chamber 9.

The chamber 9 is located inside the lower filtering zone 4.

The inlet holes 10 for feed liquid formed in the upper part of the chamber 9 are located below the upper edge of the hollow fibers of the hollow fiber element 5, the inlet holes 10 formed in the lower part of the chamber 9 are located closer to the sealing element 12. The sorption filter material 22 is made from, for example, an ion exchange fiber or a mixture of an ion exchange fiber and an activated carbon, and is located to the level of the upper edge of the hollow fibers of the hollow fiber element 5 inside the chamber 9.

The air vent means 6 consists of the base 13 and the vertical part 14, the side walls of which are resistant to liquid and to air. The air vent means 6, for example, can be welded or fitted in the upper part of the chamber 9 of the means for changing the direction of feed liquid flow 7 or can be integrated with the upper part of the chamber 9 of the means for changing the direction of feed liquid flow 7.

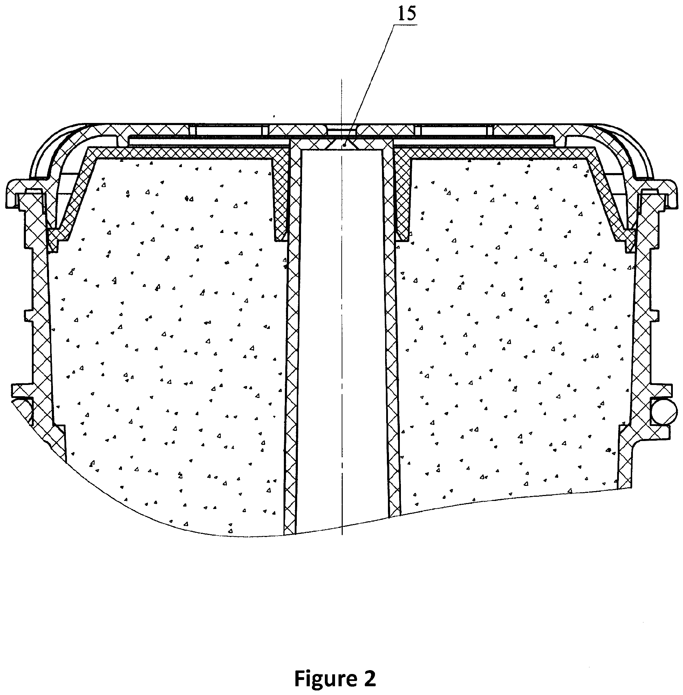

The air outlet element of the air vent means 6, for example, can be made in the form of the outlet hole 15 (FIG. 1, 2) for forced-feed air vent having a diameter that obstructs the liquid flow down from the top through the said outlet hole 15. The diameter of the outlet hole 15 should be less than 1.2 mm and preferably should be in the range from 0.4 to 1.0 mm.

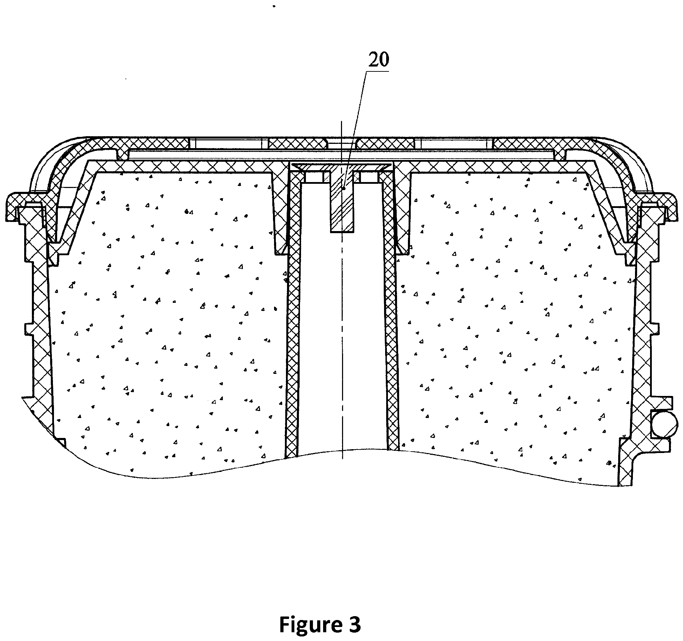

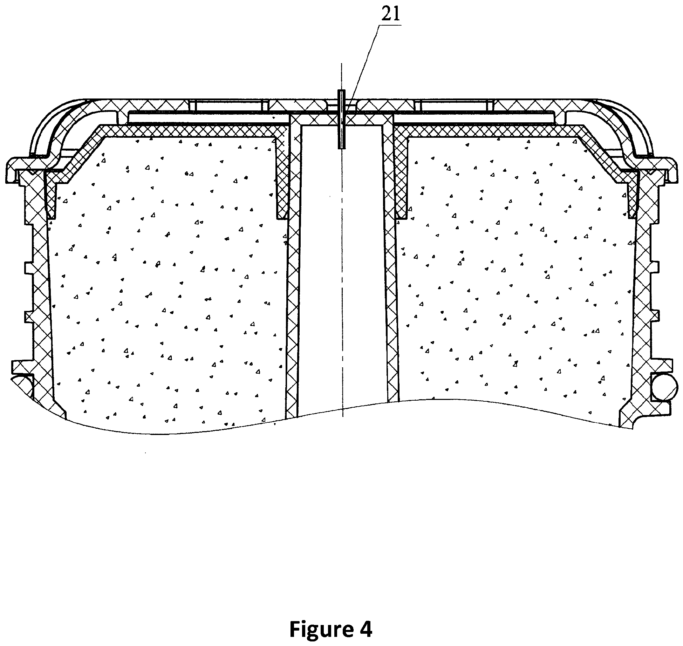

The air vent element of the air vent means 6, for example, can be made in the form of a valve 20 (FIG. 3) opening upward under the pressure of an air bubble and closing down under the pressure of liquid, also in the form of the membrane valve or in the form of the petal valve. Also the air vent element of the air vent means 6 can be made in the form of the capillary 21 (FIG. 4) having a diameter sufficient to air passage and obstructing liquid flow down.

The inlet holes 18 for source liquid are provided in the lid 17 of the liquid purification device. The hole 16 is formed in the central part of the lid 17 and connected to the air vent element.

Additionally the inlet holes 18 for source liquid can be made in the upper portion of the side walls of the main part of the body frame 1 of the liquid purification device.

The outlet holes for purified liquid 19 are provided in the bottom wall of the main body part 1 of the liquid purification device.

Within the features of the invention the liquid purification device described above functions as follows. The liquid purification device is located between the source liquid tank and the purified liquid tank. The source liquid tank (not presented in figures) is filled with source liquid, and opposed to the closest analogue solution, the height of source liquid column can be any. Source liquid flows into the upper filtering zone 2 through the inlet holes 18 in the lid 17, then flows from up to down through the filter material 22 and passes into the vertically oriented inner annular space 8 of the lower filtering zone 4. After passing from up to down at least a part of the vertically oriented inner annular space 8, liquid flows radially through the inlet holes 10 into the chamber 9 of the means for changing the direction of feed liquid flow 7. Inside the chamber 9 liquid flows partially upward and simultaneously radially flows into the hollow fibers by means of capillary forces. In this case, purified liquid exits the liquid purification device through the outlet holes for purified liquid 19.

At the same time, air contained in the hollow fiber element 5 moves upward and accumulates in the base 13 of the air vent means 6 due to that part of feed liquid flows upward. An air bubble is formed inside the base 13 of the air vent means 6, which gradually passes into an elastic form. The air vent means 6 is formed in such a way that provides a gradual upward draft of the air bubble within the vertical part 14 of the air vent means 6 and through the air vent element (FIG. 1 and 2), 20 (FIG. 3), 21 (FIG. 4)) into the external environment. As previously indicated, the sorption filter material 22 in addition to the hollow fiber element 5 is arranged inside the chamber 9, which facilitates a better lifting upward of feed liquid entering the chamber 9 through the inlet holes 10 by capillary forces. Thus, the movement of liquid along the lower filtering zone 4 is directed so that liquid flow provides the upward motion of air flow, and liquid pressure and static voltage force an air bubble upward from the liquid purification device. In this case, since liquid inside the chamber 9 flows both radially and upward, the entire lower filtering zone 4 is involved in the filtration process, that further improves liquid purification efficiency. In this case since liquid moves first downward then radially and upward in the lower filtering zone 4, and all liquid movement is accompanied by a filtration process, then an increase in the degree of liquid purification is achieved.

Thus, at the initial moment of the filtration process, almost the entire volume of air is vented from the lower filtering zone 4 without contact with liquid, which increases the speed of the filtration process and increases the degree of liquid purification.

## Claims

1. A liquid purification device operating under the force of gravity comprising:
a lid (17) provided with inlet holes (18) for source liquid;
a body frame (1) with a vertical axis that includes an upper filtering zone (2) and a lower filtering zone (4) with filter medium (3) therein;
a means (7) for changing the direction of feed liquid flow located inside the device and containing the filter medium (3), the means (7) for changing the direction of feed liquid flow is simultaneously the lower filtering zone (4) and is formed by a chamber (9) of variable shape and size with the filter medium (3) and with inlet holes (10) located in an upper or upper and lower parts of a side wall of said chamber (9);
a vertically oriented inner annular space (8) that is in liquid communication with the chamber (9) through said inlet holes (10) and formed by an inner side wall of the body frame (1) and an outer side wall of the chamber (9) and tapers to the lower part of the body frame (1), said annular space (8) containing sorption filter material (22) and is designed to pass feed liquid from the upper filtering zone (2) into the chamber (9) through the inlet holes (10) in radial direction;
an air vent means (6) to remove air from the lower filtering zone (4) made of a base (13) and a vertical part (14), the base (13) of said air vent means (6) is connected to the upper part of the chamber (9) of the means (7) for changing the direction of feed liquid flow and has an air vent element located in an upper wall of said air vent means (6);
the liquid purification device being configured for air removal from the lower filtering zone (4) by an upward feed liquid flow at the beginning of a filtration process during filling said device with feed liquid,
***characterized in that*** the liquid purification device comprises a hollow fiber element (5) and the sorption filter material (22) arranged inside the chamber (9) of the means (7) for changing the direction of feed liquid flow.

2. The liquid purification device according to claim 1, **characterized in that** the base (13) of the air vent means (6) has side walls resistant to liquid and air.

3. The liquid purification device according to claim 1, **characterized in that** an upper edge of the vertically oriented inner annular space (8) extends at the level of the top of the side wall of the base (13) of the air vent means (6).

4. The liquid purification device according to claim 1, **characterized in that** the lower part of the chamber (9) of the means (7) for changing the direction of feed liquid flow has at least one sealing element (12).

5. The liquid purification device according to claim 4, **characterized in that** the at least one sealing element (12) is integrally formed with the side wall of the chamber (9).

6. The liquid purification device according to claim 4, **characterized in that** the at least one sealing element (12) is formed as a separate element connected to the side wall of the chamber (9).

7. The liquid purification device according to claim 1, **characterized in that** an upper edge of the inner annular space (8) coincides with a boundary layer of the filter material (3) of the upper filtering zone (2), and at the bottom, said inner annular space (8) coincides with a bottom wall of the body frame (1).

8. The liquid purification device according to claim 1, **characterized in that** the base (13) of the air vent means (6) is integrally formed with the upper part of the chamber (9) of the means (7) for changing the direction of feed liquid flow.

9. The liquid purification device according to claim 1, **characterized in that** said air vent element of the air vent means (6) is formed as an outlet hole (15) for forced-feed air vent having a diameter that obstructs liquid flow down from the top through said outlet hole (15).

10. The liquid purification device according to claim 9, **characterized in that** the diameter of said outlet hole (15) is less than 1.2 mm and, preferably, is in the range of 0.4 to 1.0 mm.

11. The liquid purification device according to claim 1, **characterized in that** the air vent element of the air vent means (6) is formed as a valve (20) opening upward under the pressure of an air bubble and closing down under the pressure of liquid.

12. The liquid purification device according to claim 11, **characterized in that** the air vent element is formed as a membrane valve.

13. The liquid purification device according to claim 11, **characterized in that** the air vent element is formed as a petal valve.

14. The liquid purification device according to claim 1, **characterized in that** the air vent element of the air vent means (6) is formed as a capillary (21) having a diameter sufficient to air passage and obstructing liquid flow down, preferably less than 1.2 mm.

15. The liquid purification device according to claim 1, **characterized in that** the filter medium (3) comprises sorption materials (22), such as activated carbon, activated carbon fiber, ion exchange resins, ion exchange fibers, and hollow fiber elements (5), mesh filter materials, mineralizing materials and any combination of these materials and elements.

## Patentansprüche

1. Flüssigkeitsreinigungsvorrichtung, die mittels Schwerkraft funktioniert, umfassend:
einen Deckel (17), der mit Einlasslöchern (18) für eine Quellflüssigkeit versehen ist;
einen Gehäuserahmen (1) mit einer vertikalen Achse, der eine obere Filterzone (2) und eine untere Filterzone (4) mit einem Filtermedium (3) darin einschließt;
ein Mittel (7) zum Verändern der Richtung des Zulaufflüssigkeitsstroms, das sich im Inneren der Vorrichtung befindet und das Filtermedium (3) enthält, wobei das Mittel (7) zum Verändern der Richtung des Zulaufflüssigkeitsstroms gleichzeitig die untere Filterzone (4) ist und von einer Kammer (9) unterschiedlicher Form und Größe gebildet wird, wobei sich das Filtermedium (3) und die Einlasslöcher (10) in einem oberen oder in einem oberen und einem unteren Teil einer Seitenwand der Kammer (9) befinden;
einen vertikal ausgerichteten inneren ringförmigen Raum (8), der mit der Kammer (9) über die Einlasslöcher (10) in Flüssigkeitskommunikation steht und von einer inneren Seitenwand des Gehäuserahmens (1) und einer äußeren Seitenwand der Kammer (9) gebildet wird und sich zum unteren Teil des Gehäuserahmens (1) hin verjüngt, wobei der ringförmige Raum (8) ein Sorptionsfiltermaterial (22) enthält und konzipiert ist, um Zulaufflüssigkeit in radialer Richtung von der oberen Filterzone (2) durch die Einlasslöcher (10) in die Kammer (9) zu leiten;
ein Entlüftungsmittel (6) zum Entfernen von Luft aus der unteren Filterzone (4), das aus einer Basis (13) und einem vertikalen Teil (14) besteht, wobei die Basis (13) des Entlüftungsmittels (6) mit dem oberen Teil der Kammer (9) des Mittels (7) zum Verändern der Richtung des Zulaufflüssigkeitsstroms verbunden ist, und ein in einer oberen Wand des Entlüftungsmittels (6) befindliches Entlüftungselement aufweist;
wobei die Flüssigkeitsreinigungsvorrichtung zum Entfernen von Luft aus der unteren Filterzone (4) durch einen Aufwärts-Zulaufflüssigkeitsstrom zu Beginn eines Filtrationsprozesses während des Befüllens der Vorrichtung mit Zulaufflüssigkeit konfiguriert ist,
***dadurch gekennzeichnet,* dass** die Flüssigkeitsreinigungsvorrichtung ein Hohlfaserelement (5) und das Sorptionsfiltermaterial (22), die im Inneren der Kammer (9) des Mittels (7) zum Verändern der Richtung des Zulaufflüssigkeitsstroms angeordnet sind, umfasst.

2. Flüssigkeitsreinigungsvorrichtung nach Anspruch 1, **dadurch gekennzeichnet, dass** die Basis (13) des Entlüftungsmittels (6) Seitenwände aufweist, die gegenüber Flüssigkeit und Luft beständig sind.

3. Flüssigkeitsreinigungsvorrichtung nach Anspruch 1, **dadurch gekennzeichnet, dass** sich ein oberer Rand des vertikal ausgerichteten inneren ringförmigen Raums (8) auf der Höhe der Oberseite der Seitenwand der Basis (13) des Entlüftungsmittels (6) erstreckt.

4. Flüssigkeitsreinigungsvorrichtung nach Anspruch 1, **dadurch gekennzeichnet, dass** der untere Teil der Kammer (9) des Mittels (7) zum Verändern der Richtung des Zulaufflüssigkeitsstroms mindestens ein Dichtelement (12) aufweist.

5. Flüssigkeitsreinigungsvorrichtung nach Anspruch 4, **dadurch gekennzeichnet, dass** das mindestens eine Dichtelement (12) mit der Seitenwand der Kammer (9) einstückig gebildet ist.

6. Flüssigkeitsreinigungsvorrichtung nach Anspruch 4, **dadurch gekennzeichnet, dass** das mindestens eine Dichtelement (12) als separates Element gebildet ist, das mit der Seitenwand der Kammer (9) verbunden ist.

7. Flüssigkeitsreinigungsvorrichtung nach Anspruch 1, **dadurch gekennzeichnet, dass** sich ein oberer Rand des inneren ringförmigen Raums (8) mit einer Grenzschicht des Filtermaterials (3) der oberen Filterzone (2) deckt und sich der innere ringförmige Raum (8) auf der Unterseite mit einer unteren Wand des Gehäuserahmens (1) deckt.

8. Flüssigkeitsreinigungsvorrichtung nach Anspruch 1, **dadurch gekennzeichnet, dass** die Basis (13) des Entlüftungsmittels (6) mit dem oberen Teil der Kammer (9) des Mittels (7) zum Verändern der Richtung des Zulaufflüssigkeitsstroms einstückig ausgebildet ist.

9. Flüssigkeitsreinigungsvorrichtung nach Anspruch 1, **dadurch gekennzeichnet, dass** das Entlüftungselement des Entlüftungsmittels (6) als ein Auslassloch (15) für eine Zwangsentlüftung gebildet ist, das einen Durchmesser aufweist, der ein Herunterströmen der Flüssigkeit von der Oberseite durch das Auslassloch (15) verhindert.

10. Flüssigkeitsreinigungsvorrichtung nach Anspruch 9, **dadurch gekennzeichnet, dass** der Durchmesser des Auslasslochs (15) weniger als 1,2 mm beträgt und vorzugsweise im Bereich von 0,4 bis 1,0 mm liegt.

11. Flüssigkeitsreinigungsvorrichtung nach Anspruch 1, **dadurch gekennzeichnet, dass** das Entlüftungselement des Entlüftungsmittels (6) als Ventil (20) gebildet ist, das sich unter dem Druck einer Luftblase nach oben öffnet und sich unter dem Flüssigkeitsdruck nach unten schließt.

12. Flüssigkeitsreinigungsvorrichtung nach Anspruch 11, **dadurch gekennzeichnet, dass** das Entlüftungselement als Membranventil gebildet ist.

13. Flüssigkeitsreinigungsvorrichtung nach Anspruch 11, **dadurch gekennzeichnet, dass** das Entlüftungselement als Blütenblattventil gebildet ist.

14. Flüssigkeitsreinigungsvorrichtung nach Anspruch 1, **dadurch gekennzeichnet, dass** das Entlüftungselement des Entlüftungsmittels (6) als Kapillare (21) gebildet ist, die einen Durchmesser aufweist, der für einen Luftdurchlass und das Verhindern des Herunterströmens der Flüssigkeit ausreicht, vorzugsweise von weniger als 1,2 mm.

15. Flüssigkeitsreinigungsvorrichtung nach Anspruch 1, **dadurch gekennzeichnet, dass** das Filtermedium (3) Sorptionsmaterialien (22), zum Beispiel Aktivkohle, aktivierte Kohlenstofffaser, lonenaustauschharze, lonenaustauschfasern und Hohlfaserelemente (5), Maschenfiltermaterialien, mineralisierende Materialien und jegliche Kombination dieser Materialien und Elemente, umfasst.

## Revendications

1. Dispositif de purification de liquide fonctionnant sous la force de la gravité, comprenant :
un couvercle (17) doté d'orifices d'admission (18) pour un liquide source ;
un châssis de corps (1) doté d'un axe vertical qui inclut une zone de filtration supérieure (2) et une zone de filtration inférieure (4) avec un milieu de filtration (3) à l'intérieur de celui-ci ;
un moyen (7) de changement de direction du flux de liquide d'alimentation situé à l'intérieur du dispositif et contenant le milieu de filtration (3), le moyen (7) de changement de direction de flux de liquide d'alimentation est simultanément la zone de filtration inférieure (4) et est formé par une chambre (9) de taille et de forme variables avec le milieu de filtration (3) et avec les orifices d'admission (10) situés dans une partie supérieure ou des parties supérieure et inférieure d'une paroi de ladite chambre (9) ;
un espace annulaire intérieur orienté verticalement (8) qui est en communication liquide avec la chambre (9) à travers lesdits orifices d'admission (10) et formé par une paroi latérale intérieure du châssis de corps (1) et une paroi latérale extérieure de la chambre (9) et s'affinrevendicatione jusqu'à la partie inférieure du châssis de corps (1), ledit espace annulaire (8) contenant un matériau de filtre à sorption (22) et est conçu pour faire passer le liquide d'alimentation de la zone de filtration supérieure (2) dans la chambre (9) à travers les orifices d'admission (10) dans une direction radiale ;
un moyen formant évent d'aération (6) pour éliminer l'air de la zone de filtration inférieure (4) composé d'une base (13) et d'une partie verticale (14), la base (13) dudit moyen formant évent d'aération (6) est raccordée à la partie supérieure de la chambre (9) du moyen (7) pour le changement de direction du flux de liquide d'alimentation et présente un élément évent d'aération situé dans une paroi supérieure dudit moyen formant évent d'aération (6) ;
le dispositif de purification de liquide étant configuré pour l'élimination d'air de la zone de filtration inférieure (4) par un flux montant de liquide d'alimentation au début d'un processus de filtration pendant le remplissage dudit dispositif de liquide d'alimentation,
***caractérisé* en ce *que*** le dispositif de purification de liquide comprend un élément à fibres creuses (5) et le matériau de filtre à sorption (22) agencé à l'intérieur de la chambre (9) du moyen (7) de changement de direction du flux de liquide d'alimentation.

2. Dispositif de purification de liquide selon la revendication 1, **caractérisé en ce que** la base (13) du moyen formant évent d'aération (6) présente des parois latérales résistantes au liquide et à l'air.

3. Dispositif de purification de liquide selon la revendication 1, **caractérisé en ce qu'**un bord supérieur de l'espace annulaire intérieur orienté verticalement (8) s'étend au niveau de la partie supérieure de la base (13) du moyen formant évent d'aération (6).

4. Dispositif de purification de liquide selon la revendication 1, **caractérisé en ce que** la partie inférieure de la chambre (9) du moyen (7) de changement de direction du flux de liquide d'alimentation présente au moins un élément d'étanchéité (12).

5. Dispositif de purification de liquide selon la revendication 4, **caractérisé en ce que** l'au moins un élément d'étanchéité (12) fait partie intégrante de la paroi latérale de la chambre (9).

6. Dispositif de purification de liquide selon la revendication 4, **caractérisé en ce que** l'au moins un élément d'étanchéité (12) est formé comme un élément séparé raccordé à la paroi latérale de la chambre (9).

7. Dispositif de purification de liquide selon la revendication 1, **caractérisé en ce qu'**un bord supérieur de l'espace annulaire interne (8) coïncide avec une couche limite du matériau de filtration (3) de la couche de filtration supérieure (2), et au niveau du fond, ledit espace annulaire interne (8) coïncide avec une paroi inférieure du châssis de corps (1).

8. Dispositif de purification de liquide selon la revendication 1, **caractérisé en ce que** la base (13) du moyen formant évent d'aération (6) fait partie intégrante de la partie supérieure de la chambre (9) du moyen (7) de changement de direction du flux de liquide d'alimentation.

9. Dispositif de purification de liquide selon la revendication 1, **caractérisé en ce que** ledit élément évent d'aération du moyen formant évent d'aération (6) est formé comme un orifice d'évacuation (15) pour évent d'aération à alimentation forcée présentant un diamètre qui obstrue le flux de liquide vers le bas à partir de la partie supérieure à travers ledit orifice d'évacuation (15).

10. Dispositif de purification de liquide selon la revendication 9, **caractérisé en ce que** le diamètre dudit orifice d'évacuation (15) est inférieur à 1,2 mm et, de préférence, dans la plage de 0,4 à 1,0 mm.

11. Dispositif de purification de liquide selon la revendication 1, **caractérisé en ce que** l'élément évent d'aération du moyen formant évent d'aération (6) est formé comme une soupape (20) s'ouvrant vers le haut sous la pression d'une bulle d'air et se fermant vers le bas sous la pression de liquide.

12. Dispositif de purification de liquide selon la revendication 11, **caractérisé en ce que** l'élément évent d'aération est formé sous la forme d'une soupape à membrane.

13. Dispositif de purification de liquide selon la revendication 11, **caractérisé en ce que** l'élément évent d'aération est formé sous la forme d'une soupape à pétales.

14. Dispositif de purification de liquide selon la revendication 1, **caractérisé en ce que** l'élément évent d'aération du moyen formant évent d'aération (6) est formé sous la forme d'un capillaire (21) présentant un diamètre suffisant pour le passage d'air et l'obstruction du flux de liquide vers le bas, de préférence inférieur à 1,2 mm.

15. Dispositif de purification de liquide selon la revendication 1, **caractérisé en ce que** le milieu de filtration (3) comprend des matériaux de sorption (22), tels que du charbon actif, une fibre de charbon actif, des résines échangeuses d'ions, des fibres échangeuses d'ions, et des éléments à fibres creuses (5), des matériaux de filtre à mailles, des matériaux de minéralisation et toute combinaison de ces matériaux et éléments.
